Europäisches Patentamt

European Patent Office

Office européen des brevets

(19)

(11) EP 0 498 735 B2

(12) # NOUVEAU FASCICULE DE BREVET EUROPEEN

(45) Date de publication et mention de la décision concernant l'opposition:
**21.04.1999 Bulletin 1999/16**

(51) Int Cl.6: **H05B 6/06**, H05B 6/12

(45) Mention de la délivrance du brevet:
**24.08.1994 Bulletin 1994/34**

(21) Numéro de dépôt: **92400326.2**

(22) Date de dépôt: **07.02.1992**

(54) **Dispositif inducteur, destiné au chauffage par induction de récipients pour la cuisine et procédé de commande d'un tel dispositif**

Induktoranordnung zum Induktionsheizen von Kochgefässen und ihre Steuerungsanlage

Inductor assembly for the induction heating of cooking vessels, and its control

(84) Etats contractants désignés:
**BE CH DE ES FR GB LI NL SE**

(30) Priorité: **08.02.1991 FR 9101428**

(43) Date de publication de la demande:
**12.08.1992 Bulletin 1992/33**

(73) Titulaire: **BONNET CIDELCEM GRANDE CUISINE Mitry Mory (77292) (FR)**

(72) Inventeur: **Gaspard, Jean-Yves F-69400 Villefranche sur Saône (FR)**

(74) Mandataire: **Boutin, Antoine et al Cabinet Tony-Durand, 78, avenue Raymond Poincaré 75116 Paris (FR)**

(56) Documents cités:
EP-A- 0 376 760          DE-A- 2 559 519
DE-A- 3 217 850          DE-A- 3 533 997
US-A- 4 319 109          US-A- 4 464 553
US-A- 4 484 048

## Description

L'invention concerne les dispositifs inducteurs destinés au chauffage par induction de récipients pour la cuisine. Ces inducteurs sont généralement regroupés dans une plaque de cuisson.

L'invention concerne également des procédés de commande de ces dispositifs inducteurs.

Les plaques de cuisson de ce genre comportent généralement une bobine d'induction alimentée par l'intermédiaire d'un onduleur avec un courant à haute fréquence, exemple 20 à 35 kHz. Cette bobine est disposée en-dessous d'un support susceptible d'être traversé par le champ magnétique produit. Ainsi, des courants induits prennent naissance dans tout récipient en métal placé sur un tel support. Ces courants ont donc pour effet de chauffer ce récipient et lui seul, ce qui est un avantage important par rapport aux plaques de cuisson par conduction thermique.

Cependant pour obtenir une efficacité maximale, il convient que le diamètre du récipient soit à peu près le même que celui de la plaque de cuisson. En effet lorsque le diamètre du récipient est nettement plus important que celui de la surface de cuisson, le chauffage par induction est imparfait car toute la zone annulaire située à l'extérieure de cette surface se trouve hors du champ magnétique produit par la bobine d'induction. Lorsque le récipient présente un diamètre nettement inférieur à celui de la surface de chauffe, la zone annulaire externe de l'inducteur est alimentée inutilement en courant électrique car il ne participe pas à la production de courant induit ayant pour effet de chauffer ce récipient. Là encore le chauffage du récipient par induction est donc imparfait. Par ailleurs, le fait que dans un tel cas la zone annulaire externe de l'inducteur soit parcourue par le courant électrique sans qu'aucune charge (récipient) soit disposée en regard, a pour inconvénient que cette zone génère des perturbations radio-électriques.

On connaît un dispositif de commande destiné à adapter la plaque à la réception de récipients de diamètres différents. Voir par exemple EP-A-0 376 760. Ce dispositif est constitué d'au moins deux éléments inducteurs distincts disposés concentriquement l'un autour de l'autre, et qui sont branchés en parallèle aux bornes d'un onduleur unique d'alimentation.

Ainsi, lorsque l'on place sur la plaque un récipient de grand diamètre correspondant à celui de l'inducteur externe, le courant se répartit entre les deux inducteurs qui participent l'un et l'autre à la production de courant induit dans le matériau de ce récipient.

Par contre, si l'on met en place un récipient de moindre diamètre correspondant à celui de l'inducteur central, seul celui-ci comporte une charge en regard. En conséquence il s'établit une adaptation du dispositif au cas considéré, c'est-à-dire que le premier inducteur reçoit la presque totalité du courant. Néanmoins, une faible quantité de courant parcourt l'inducteur externe, ce qui a pour conséquence que les inconvénients exposés précédemment sont toujours présents dans une certaine mesure.

La présente invention a pour but de proposer un procédé et un dispositif de commande d'une plaque de cuisson par chauffage par induction permettant le transfert homogène de l'énergie vers un récipient devant être chauffé par induction, tout en apportant une réduction considérable des perturbations rayonnées par le champ magnétique généré.

L'invention a pour objet un procédé de commande d'un dispositif inducteur destiné au chauffage par induction de récipients pour la cuisine, selon la revendication 1.

Selon d'autres caractéristiques du procédé suivant l'invention :

- la phase (d) implique l'alimentation successive des inducteurs se trouvant en regard d'une charge détectée;
- les inducteurs sont au nombre de trois et la phase (d) implique l'alimentation soit d'un seul inducteur, soit de tous les inducteurs simultanément;
- un des trois inducteurs est connecté en série avec le premier inducteur et un autre inducteur est connecté en parallèle sur les deux autres inducteurs;
- un des trois inducteurs est connecté en parallèle sur le premier inducteur, et un autre inducteur est connecté en série avec le premier inducteur;
- la plaque comporte un inducteur central et au moins un inducteur disposé concentriquement autour de celui-ci, chaque phase du cycle étant commencée à partir de l'inducteur central.

L'invention a également pour objet un dispositif inducteur destiné au chauffage par induction de récipients pour la cuisine selon la revendication 7.

Selon encore d'autres caractéristiques du dispositif suivant l'invention :

- la plaque de cuisson est alimentée par un onduleur à résonnance et dans le cas de plusieurs inducteurs disposés concentriquement, le bloc de commutation assure l'alimentation : - soit du seul inducteur central,
- soit de tout les inducteurs dans un montage dont l'impédance ramenée est voisine de l'impédance du seul inducteur central;
- dans le cas de trois inducteurs, le montage comprend l'inducteur central et un deuxième inducteur en série avec celui-ci, le troisième inducteur étant monté en parallèle sur les deux premiers;
- dans le cas de trois inducteurs, le montage comprend l'inducteur central et un deuxième inducteur en série avec celui-ci, le troisième inducteur étant monté en parallèle sur l'inducteur central;
- les inducteurs sont dissociés les uns des autres et associés à des plaques séparées pouvant présenter des formes ou des dimensions différentes.

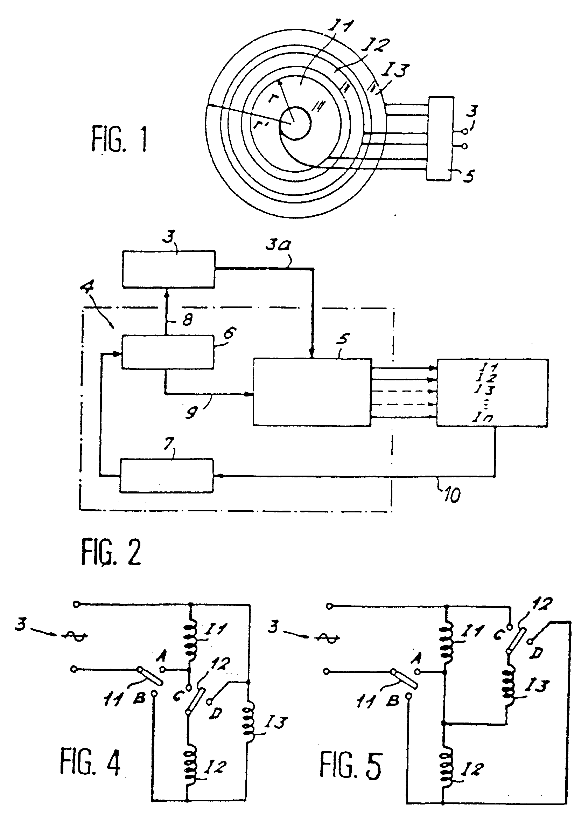

L'invention sera maintenant décrite plus en détail en référence aux dessins annexés dans lesquels : - la figure 1 est une vue schématique de dessus d'une plaque comportant trois inducteurs disposés concentriquement les uns autour des autres ;

- la figure 2 est un bloc-diagramme fonctionnel d'un dispositif de commande suivant l'invention ;
- la figure 3 est un schéma fonctionnel illustrant un exemple de procédé de commande des trois inducteurs de la figure 1 ;
- la figure 4 montre un mode de réalisation du schéma électrique d'alimentation de trois inducteurs dont deux sont branchés en série et le troisième en parallèle sur les deux autres; - la figure 5 montre un mode de réalisation du schéma électrique d'alimentation de trois inducteurs dont deux sont branchés en série et le troisième en parallèle sur le premier.

La figure 1 montre schématiquement une plaque de cuisson par chauffage par induction composée de trois inducteurs I1, I2, I3 formés par des bobines d'induction à diamètres différents. Elle comporte plus précisément un inducteur central I1 et deux inducteurs I2, I3 disposés concentriquement autour de l'inducteur central I1.

La plaque peut dans des variantes comporter un certain nombre d'inducteurs intermédiaires disposés entre les inducteurs central et périphérique et le nombre total des inducteurs peut dans ce cas être désigné par n.

Les inducteurs I1, I2, I3 sont reliés à un générateur de puissance 3 constitué par exemple par un onduleur à résonance destiné à l'alimentation de ces inducteurs.

Le dispositif de commande selon l'invention est dans son ensemble désigné par le numéro de référence 4 (voir la figure 2). Il comporte un bloc de commutation 5, un microprocesseur 6 et des moyens de traitement de signaux de charge 7.

L'une des bornes de chaque inducteur I1, I2, I3 est reliée directement au générateur 3, alors que l'autre borne est reliée à celui-ci par l'intermédiaire du bloc de commutation 5 qui à son tour est relié au générateur par un conducteur 3a. Ce bloc de commutation 5 est relié aux inducteurs I1, I2, I3 de manière à pouvoir alimenter un ou plusieurs inducteurs successivement en commençant par l'inducteur central I1.

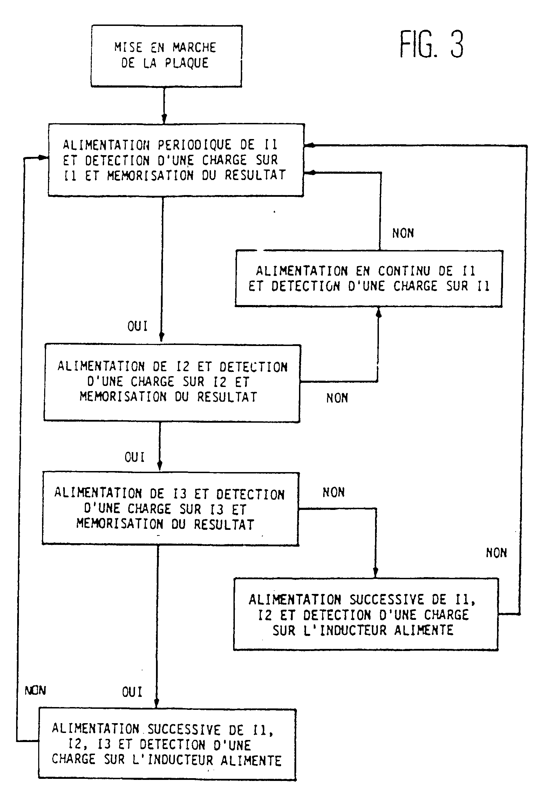

Le micro-processeur 6 a une entrée reliée aux moyens de traitement de signaux 7 qui, à leur tour, sont reliés aux inducteurs I1, I2, I3. L'une des sorties du microprocesseur 6 est reliée au bloc de commutation 5 et l'autre sortie est reliée au générateur 3. Le fonctionnement du circuit de commande 4 sera maintenant décrit en référence aux figures 2 et 3.

D'abord on place un récipient en métal ferritique (non représenté) au centre de la plaque de cuisson, ensuite on met celle-ci en route en agissant sur un interrupteur principal (non représenté) inséré dans le circuit d'alimentation du circuit de commande et du générateur à partir du réseau électrique.

Le micro-processeur 6 est ainsi actionné pour envoyer un signal de commande 8 au générateur 3 et simultanément un signal de sélection 9 au bloc de commutation 5 qui sélectionne l'alimentation de l'inducteur central I1.

L'inducteur central I1 est ainsi alimenté par le générateur 3 de sorte qu'un signal de détection de charge 10 puisse être obtenu de l'inducteur I1. Ce signal de détection 10 est traité et analysé par les moyens de traitement 7 qui ensuite transmettent des informations à l'entrée du microprocesseur 6. Un premier cycle de détection est ainsi terminé et son résultat est mémorisé dans le microprocesseur 6 qui ensuite, si une charge a été détectée sur l'inducteur central I1, envoie un nouveau signal de sélection 9 au bloc de commutation 5 qui sélectionne l'alimentation de l'inducteur I2. Un second cycle de détection analogue au premier est ensuite effectué et le résultat est mémorisé dans le micro-processeur 6 qui ensuite, si une charge a également été détectée sur le deuxième inducteur I2, envoie un nouveau signal de sélection 9 au bloc de commutation 5 qui sélectionne l'alimentation de l'inducteur I3. Un troisième cycle de détection est ensuite effectué et ainsi de suite jusqu'à ce que la charge en regard de tous les inducteurs en terminant par l'inducteur In soit détectée.

La figure 3 illustre le fonctionnement du dispositif selon ce premier mode de réalisation. Dans cette figure "OUI" veut dire qu'une charge est détectée sur l'inducteur correspondant, et "NON" qu'une charge est absente. Par ailleurs, cette détection préliminaire indique l'un des 4 cas possibles de la plaque de la figure 1 :

A. Absence de récipient sur la plaque :

Ce cas correspond à un état d'attente après la mise en marche du générateur 3. Dans cet état, l'inducteur I1 est périodiquement alimenté et une charge éventuelle sur celui-ci est détectée à l'aide des moyens de traitement 7 qui reçoivent le signal de charge 10 en provenance de l'inducteur I1.

B. Présence du récipient sur l'inducteur I1 seul :

Dans ce cas, seul l'inducteur I1 est alimenté en même temps qu'une détection de la présence de la charge sur celui-ci est effectuée par les moyens de traitement 7. L'état correspond ainsi à l'état décrit sous A.

C. Présence d'une charge sur les inducteurs I1 et I2 :

Dans ce cas, seuls les inducteurs I1 et I2 sont alimentés successivement, la présence de la charge sur chaque inducteur étant détectée chaque fois que celui-ci est alimenté. Si on enlève le récipient, l'absence de la charge est détectée sur l'inducteur et le dispositif revient automatiquement à l'état d'attente A.

**D. Présence d'une charge sur les inducteurs I1, I2 et I3:**

Dans ce cas, tous les inducteurs sont alimentés successivement et la charge est détectée sur chaque inducteur chaque fois que celui-ci est alimenté. De la même façon que dans le cas C, le dispositif est automatiquement remis à son état initial d'attente A si on enlève le récipient.

Dans le cas d'alimentation d'inducteurs successifs et pour le bon fonctionnement du générateur, c'est-à-dire pour obtenir un rendement optimal, il est nécessaire de créer des conditions de fonctionnement permettant le maintien d'une fréquence de résonnance à peu près constante suivant la formule :

$$f = 1/(2\pi\sqrt{LC})$$

où C est la valeur du condensateur de résonnance et L est la valeur de l'inductance ramenée de la bobine chargée par le récipient.

Donc, les différents inducteurs bobinés de façon concentrique doivent présenter des caractéristiques similaires d'inductance de même que des caractéristiques similaires de résistance ramenée pour que le générateur puisse travailler, dans des conditions similaires.

Or, lorsqu'on bobine des inducteurs de façon concentrique, plus le rayon augmente, plus les caractéristiques de self-inductance sont entre autres importantes. Ceci restreint les possibilités de réalisation du système décrit.

Le mode de réalisation du circuit électrique montré sur la figure 4 est destiné à créer des conditions de fonctionnement permettant le maintien de la fréquence de résonance du générateur à un niveau à peu près constant pendant le fonctionnement de chaque inducteur d'une plaque.

Comme déjà indiqué en référence à la figure 1, les inducteurs sont de préférence disposés concentriquement les uns autour des autres de manière à constituer une seule plaque de chauffage, mais les bobines des inducteurs pourraient aussi être complètement dissociées et avoir des formes et dimensions complètement différentes pour être associées à des plaques présentant des formes ou des dimensions correspondantes.

Ainsi, un premier inducteur peut être associé à une plaque circulaire destinée au chauffage d'une casserole ayant un fond correspondant à celui-ci, et un deuxième inducteur qui est par exemple associé à une plaque oblongue destinée à recevoir un récipient dont le fond présente une forme correspondante, ce récipient étant habituellement utilisé pour le cuisson de plats à poisson.

La détection d'une charge se fait dans ce cas comme précédemment décrit en référence à la figure 3, c'est-à-dire que la charge est détectée sur le premier inducteur et dès qu'une charge y est détectée, on commence à détecter une charge éventuelle sur le deuxième inducteur.

L'exemple illustré sur la figure 4 est, afin de simplifier la description, limité à une plaque conçue pour fonctionner avec des petits récipients ayant un rayon r et pour des grands récipients ayant un rayon r' tel que r' >r. (Voir Figure 1).

Les bornes de l'inducteur central I1 sont reliées au générateur 3 par l'intermédiaire d'un commutateur 11 à deux positions définies par deux bornes A et B.

L'inducteur intermédiaire I2 est connecté en série avec l'inducteur central I1 par l'intermédiaire d'un deuxième commutateur 12 à deux positions définies par deux bornes C et D. La borne C assure la liaison entre les inducteurs I1 et I2 alors que la borne D est reliée à une boucle branchée en parallèle sur les inducteurs I1 et I2, et dans laquelle le troisième inducteur 13 est inséré, entre la connexion de la borne D et l'inducteur I2. L'inducteur I2 peut être relié au générateur 3 par la borne B du commutateur 11 lorsque le commutateur 12 se trouve dans la position définie sur la borne C. Les commutateurs 11 et 12 constituent un bloc de commutation analogue au bloc 5 représenté à la figure 2.

Les commutateurs sont liés de sorte que lorsque 11 est sur A, 12 est sur D et lorsque 11 est sur B, 12 est sur C. Le changement de l'état des commutateurs ne s'effectue qu'en cas de modification de récipient ou de remise à zéro du microprocesseur par arrêt de l'appareil.

La connexion s'effectue de manière à ce que les champs magnétiques générés par les bobines soient en phase dans le cas de l'alimentation simultanée de plusieurs bobines.

Cet agencement présente ainsi deux états stables :

- un premier état dans lequel le commutateur 11 est dans sa position A et le commutateur 12 est dans sa position D, ce qui a pour conséquence que seul l'inducteur central I1 peut être alimenté par le générateur 3, et pendant ce temps (I2 + I3) sont en court-circuit, donc les courants induits dans ces bobines génèrent un champ magnétique en opposition de phase avec le champ du I1, ce qui a pour effet de diminuer les perturbations rayonnées.
- Un second état dans lequel le commutateur 11 est dans sa position B et le commutateur 12 est dans sa position C, ce qui a pour conséquence que tous les inducteurs I1, I2 et I3 peuvent être alimentés simultanément. Le champ parasite est diminué à l'aide d'une contre-spire (non représentée) autour de I3.

Dans ce second état, les bobines sont telles que, l'inductance totale L = (L1+L2)//L3≈L1, ce qui veut dire que la fréquence de résonance (f =1/(2π √LC) du générateur 3 est à peu près constante comparativement au premier état dans lequel L=L1. Les résistances ramenées des bobines chargées sont de même quasiment identiques dans l'état 1 avec un petit récipient et dans l'état 2 avec un grand récipient.

Le générateur 3 et les inducteurs I1, I2, I3 sont reliés à un dispositif de commande analogue à celui représenté sur la figure 2, mais dans lequel le bloc de commutation comporte les commutateurs 11 et 12.

Par ailleurs, le cycle de détection de la charge sur la plaque est analogue à celui décrit ci-dessus, avec la différence toutefois que le second cycle de détection de la présence d'une charge s'applique à l'ensemble des inducteurs I1, I2 et I3.

Une variante de l'agencement comprenant trois inducteurs I1, I2 et I3 est montrée à la figure 5. Comme dans la première vanante décrite en référence à la figure 4, les bornes de l'inducteur central I1 sont reliées au générateur 3 par l'intermédiaire d'un commutateur 11 à deux positions définies par deux bornes A et B.

L'inducteur intermédiaire I2 est connecté en série avec l'inducteur central I1 et le troisième inducteur I3 est selon cette variante branché en parallèle sur uniquement le seul inducteur I1, par l'intermédiaire d'un deuxième commutateur 12 à deux positions définies par deux bornes C et D. La borne C assure la liaison entre les inducteurs I1 et I3 alors que la borne D est reliée à une boucle branchée en parallèle sur les inducteurs I2 et I3, de manière à court-circuiter ceux-ci lorsque la borne D est fermée.

L'inducteur I2 peut être relié au générateur 3 par la borne B du commutateur 11 lorsque le commutateur 12 se trouve dans la position définie sur la borne C. Les commutateurs 11 et 12 constituent un bloc de commutation analogue au bloc 5 représenté à la figure 2.

Les commutateurs sont liés de sorte que lorsque 11 est sur A, 12 est sur D et lorsque 11 est sur B, 12 est sur C.

La connexion s'effectue de manière à ce que les champs magnétiques générés par les bobines soient en phase dans le cas de l'alimentation simultanée de plusieurs bobines.

Cet agencement présente également deux états stables:

- un premier état dans lequel le commutateur 11 est dans sa position A et le commutateur 12 est dans sa position D, ce qui a pour conséquence que seul l'inducteur central I1 est alimenté par le générateur 3, les deux autres inducteurs (I2 et I3) se trouvant entre-temps en court-circuit.
- un second état dans lequel le commutateur 11 est dans sa position B et le commutateur 12 est dans sa position C, ce qui a pour conséquence que tous les inducteurs I1, I2 et I3 sont alimentés simultanément.

Le résultat obtenu par cette variante est essentiellement le même qu'avec la variante décrite en référence à la figure 4, c'est-à-dire que les impédances ramenées des bobines chargées sont quasiment identiques dans l'état 1 avec un petit récipient et dans l'état 2 avec un grand récipient.

Il serait par ailleurs possible, dans les deux variantes qui viennent d'être décrites en référence aux figures 4 et 5, de réduire la détection à une seule phase en plaçant l'agencement initialement dans ce qui a été défini ci-dessus comme son second état et en effectuant ensuite une détection de la charge, ce qui donne la dimension du récipient. A partir de cette information, le microprocesseur ou maintient l'agencement dans le second état, ou envoie une commande au bloc de commutation afin de commuter vers le premier état destiné aux récipients ayant un diamètre plus petit.

A partir de la relation $f = 1(2\pi \sqrt{LC})$, il est naturellement possible de créer des conditions permettant le maintien d'une fréquence à peu près constante après commutation des inducteurs, sans avoir recours à une compensation de l'inductance de l'inducteur I1 par l'indicateur I2, lors de la mise en parallèle de l'inducteur I3. Cette variante impliquerait la modification de la capacité au niveau des condensateurs reliés à l'onduleur. Selon cette variante on maintiendrai la fréquence à peu près constante à l'aide de condensateurs (non représentés) ajoutés à ceux déjà existants de l'onduleur.

## Revendications

1. Procédé de commande d'un dispositif inducteur destiné au chauffage par induction de récipients pour la cuisine, ce dispositif inducteur comportant plusieurs inducteurs reliés à un onduleur unique d'alimentation, suivant lequel on met l'onduleur en marche pour alimenter les inducteurs, caractérisé en qu'il comporte en outre les phases suivantes consistant à :

   (a) alimenter périodiquement un premier inducteur (I1) pour détecter une charge éventuelle sur celui-ci, cette phase constituant une phase d'attente d'une charge ;
   (b) alimenter, après détection d'une charge sur le premier inducteur (I1), l'inducteur suivant (I2) pour détecter une charge éventuelle sur celui-ci ;
   (c) détecter successivement la présence d'une charge sur chaque inducteur (...In) en l'alimentant si une charge est détectée sur l'élément inducteur précédent, les inducteurs alimentés successivement accroissant à chaque fois la surface de chauffage délimitée par les inducteurs précédents.
   (d) alimenter un seul ou plusieurs des inducteurs (I1, I2, I3, ...In) en fonction de la dimension de la charge détectée tout en détectant la présence de la charge sur l'inducteur alimenté; (e) revenir à la phase d'attente (a) lorsque l'absence de la charge sur l'inducteur alimenté (I1 ...In) est détectée.

2. Procédé suivant la revendication 1, caractérisé en ce que la phase (d) implique l'alimentation successive des inducteurs (I1 à In) se trouvant en regard d'une charge détectée.

3. Procédé suivant la revendication 1, caractérisé en ce que les inducteurs sont au nombre de trois (I1, I2, I3), et en ce que la phase (d) implique l'alimentation soit d'un seul inducteur (I1), soit de tous les inducteurs (I1, I2, I3) simultanément.

4. Procécé suivant la revendication 3, caractérisé en ce qu'un (I2) des trois inducteurs est connecté en série avec le premier inducteur (I1), et un autre inducteur (I3) est connecté en parallèle sur les deux autres inducteurs (I1, I2).

5. Procédé suivant la revendication 3, caractérisé en ce qu'un (I3) des trois inducteurs est connecté en parallèle sur le premier inducteur (I1), et un autre inducteur (I2) est connecté en série avec le premier inducteur (I1).

6. Procédé suivant une quelconque des revendications précédentes, dans lequel la plaque comporte un inducteur central (I1) et au moins un inducteur (I2) disposé concentriquement autour de celui-ci, caractérisé en ce que chaque phase du cycle est commnencée à partir de l'inducteur central.

7. Dispositif inducteur destiné au chauffage par induction de récipients pour la cuisine, comprenant un générateur (3) alimentant plusieurs inducteurs (I1, I2, I3... In), et un bloc de commutation (5) susceptible d'assurer l'alimentation sélective d'un ou plusieurs de ces inducteurs (I1, I2, I3, ...In), caractérisé en ce qu'il comporte :

- un circuit comprenant des moyens de traitement (7) reliés aux inducteurs (I1, I2, I3, ...In) afin de recevoir des signaux correspondant à la charge disposée en regard de ceux-ci, les moyens de traitement (7) étant susceptibles d'effectuer une analyse de la dimension de la charge sur les inducteurs et de délivrer des informations, et
- un microprocesseur (6) relié aux moyens de traitement et susceptible de commander le bloc de commutation (5) et le générateur (3) afin d'assurer l'alimentation des inducteurs (I1, I2, I3... In) en tenant compte des informations reçues du circuit de traitement, de manière à :

(a) alimenter périodiquement un premier inducteur (I1) pour détecter une charge éventuelle sur celui-ci, cette phase constituant une phase d'attente d'une charge ;
(b) alimenter, après détection d'une charge sur le premier inducteur (I1), l'inducteur suivant (I2) pour détecter une charge éventuelle sur celui-ci ;
(c) détecter successivement la présence d'une charge sur chaque inducteur (...In) en l'alimentant si une charge est détectée sur l'élément inducteur précédent , les inducteurs alimentés successivement accroissant à chaque fois la surface de chauffage délimitée par les inducteurs précédents ;
(d) alimenter un seul ou plusieurs des inducteurs (I1, I2, I3, ...In) en fonction de la dimension de la charge détectée tout en détectant la présence de la charge sur l'inducteur alimenté ;
(e) revenir à la phase d'attente (a) lorsque l'absence de la charge sur l'inducteur alimenté (I1...In) est détectée.

8. Dispostif suivant la revendication 7, pour plaque de cuisson alimentée par un générateur constitué par un onduleur à résonnance (3), caractérisé en ce que, dans le cas de plusieurs inducteurs (I1, I2, I3) disposés concentriquement, le bloc de commutation assure l'alimentation :

- soit du seul inducteur central (1),
- soit de tous les inducteurs dans un montage dont l'impédance ramenée est voisine de l'impédance du seul inducteur central.

9. Dispositif suivant la revendication 8, caractérisé en ce que, dans le cas de trois inducteurs (I1, I2, I3), le montage comprend l'inducteur central (I1) et un deuxième inducteur (I2) en série avec celui-ci, le troisième inducteur (I3) étant monté en parallèle sur les deux premiers.

10. Dispositif suivant la revendication 8, caractérisé en ce que, dans le cas de trois inducteurs (I1, I2, I3), le montage comprend l'inducteur central (I1) et un deuxième inducteur (I2) en série avec celui-ci, le troisième inducteur (I3) étant monté en parallèle sur l'inducteur central (I1).

11. Dispositif suivant l'une quelconque des revendications 7 à 10, caractérisé en ce que les inducteurs sont dissociés les uns des autres et associés à des plaques séparées pouvant présenter des formes ou des dimensions différentes.

**Patentansprüche**

1. Verfahren zum Steuern einer Induktoranordnung zum Induktionsheizen von Kochgefässen, wobei die Induktoranordnung mehrere Induktoren aufweist, die mit einem einzigen Speisewechselrichter verbunden sind, der zur Versorgung der Induktoren eingeschaltet wird, dadurch gekennzeichnet, daß das Verfahren darüberhinaus folgende Phasen aufweist:

   (a) Periodisches Speisen eines ersten Induktors (I1) mit dem Ziel, eine eventuelle Belastung an ihm festzustellen, wobei diese Phase eine Bereitschaftsphase für eine Aufladung bildet;
   (b) Speisen eines folgenden Induktors (I2) nach dem Feststellen einer Belastung an dem ersten Induktor (I1) mit dem Ziel, eine eventuelle Belastung an ihm festzustellen;
   (c) fortlaufendes Feststellen der Anwesenheit einer Belastung an jedem Induktor (...In) durch Speisen, wenn eine Belastung an einem voranaehenden Induktor festgestellt wurde, indem die nach und nach gespeisten Induktoren jedesmal die durch die vorangehenden Induktoren begrenzte Oberfläche der Heizung vergrößern;
   (d) Speisen eines einzigen oder mehrerer Induktoren (I1, I2, I3, ...In) als Funktion der Dimension der festgestellten Belastung, indem die Anwesenheit der Belastung an einem gespeisten Induktor festgestellt wird;
   (e) Rückkehr zur Bereitschaftsphase (a), wenn das Fehlen einer Belastung an einem gespeisten Induktor festgestellt wird.

2. Verfahren nach Anspruch 1, dadurch gekennzeichnet, daß die Phase (d) die aufeinanderfolgende Speisung der Induktoren (I1 bis In) in Abhängigkeit von der Feststellung einer Belastung einschließt.

3. Verfahren nach Anspruch 1, dadurch gekennzeichnet, daß drei Induktoren (I1, I2, I3) vorgesehen sind, und daß die Phase (d) einerseits die Speisung eines einzigen Induktors (I1) und andererseits aller Induktoren (I1, I2, I3) gleichzeitig einschließt.

4. Verfahren nach Anspruch 3, dadurch gekennzeichnet, daß einer (I2) der drei Induktoren in Reihe mit dem ersten Induktor (I1) verbunden ist, und daß ein anderer Induktor (I3) zu den zwei anderen Induktoren (I1, I2) parallelgeschaltet ist.

5. Verfahren nach Anspruch 3, dadurch gekennzeichnet, daß einer der drei Induktoren (I3) zu dem ersten Induktor (I1) parallelgeschaltet ist, und daß ein anderer Induktor (I2) in Reihe mit dem ersten Induktor (I1) verbunden ist.

6. Verfahren nach einem der vorangehenden Ansprüche, wobei die Heizplatte einen zentral angeordneten Induktor (I1) aufweist und mindestens ein konzentrisch diesen umgebender Induktor (I2) vorgesehen ist, dadurch gekennzeichnet, daß jede Phase eines Zyklusses mit dem zentral angeordneten Induktor eingeleitet wird.

7. Induktoranordnung zum Induktionsheizen von Kochgefässen, mit einem mehrere Induktoren (I1, I2, I3, ...In) speisenden Generator (3) und einem Schaltblock (5) für die selektive Speisung eines oder mehrerer Induktoren (I1, I2, I3, ...In), dadurch gekennzeichnet, daß sie folgende Merkmale aufweist:

   - einen Schaltkreis mit Schaltelementen (7), die mit den Induktoren (I1, I2, I3, In) zum Empfang von ihrer Belastung entsprechenden Signalen verbunden sind, wobei die Schaltelemente (7) zur Feststellung der Dimension der Belastung auf den Induktoren und zur Abgabe von Informationen geeignet sind, und
   - einen Mikroprozessor (6), der mit den Schaltelementen verbunden und zur Steuerung des Schaltblocks (5) geeignet ist, und den Generator (3) zur Speisung der Induktoren (I1, I2, I3, ... In) in Abhängigkeit von den empfangenen Informationen des Schaltkreises, die wie folgt betrieben werden :

   (a) Periodisches Speisen eines ersten Induktors (I1) mit dem Ziel, eine eventuelle Belastung an ihm festzustellen, wobei diese Phase eine Bereitschaftsphase für eine Aufladung bildet;
   (b) Speisen eines folgenden Induktors (I2) nach dem Feststellen einer Belastung an dem ersten Induktor (I1) mit dem Ziel, eine eventuelle Belastung an ihm festzustellen;
   (c) fortlaufendes Feststellen der Anwesenheit einer Belastung an jedem Induktor (... In) durch Speisen, wenn eine Belastung an einem voranaehenden Induktor festaestellt wurde, indem die nach und nach gespeisten Induktoren jedesmal die durch die vorangehenden Induktoren begrenzte Oberfläche der Heizung vergrößern;
   (d) Speisen eines einzigen oder mehrerer Induktoren (I1, I2, I3, ...In) als Funktion der Dimension der festgestellten Belastung, indem die Anwesenheit der Belastung an einem gespeisten Induktor festgestellt wird;
   (e) Rückkehr zur Bereitschaftsphase (a), wenn das Fehlen einer Belastung an einem gespeisten Induktor festgestellt wird.

8. Induktoranordnung nach Anspruch 7 für eine Heizplatte, die von einem von einem Resonanzondulator (3) gebildeten Generator gespeist wird, dadurch gekennzeichnet, daß im Falle der Anordnung mehrerer konzentrischer Induktoren (I1, I2, I3) der Schaltblock folgende Speisung sicherstellt:

- entweder den einzigen zentral angeordneten Induktor (I1),
- oder alle Induktoren bei einer Schaltung, bei der die rückgeführte Impedanz in der Nähe der Impedanz des einzigen zentral angeordneten Induktors liegt.

9. Induktoranordnung nach Anspruch 8, dadurch gekennzeichnet, daß die Schaltung im Falle von drei Induktoren (I1, I2, I3) den zentral angeordneten Induktor (I1) und einen zweiten, in Reihe mit diesem geschalteten Induktor (I2) aufweist, wobei der dritte Induktor (I3) zu den beiden ersten parallelgeschaltet ist.

10. Induktoranordnung nach Anspruch 8, dadurch gekennzeichnet, daß die Schaltung im Falle von drei Induktoren (I1, I2, I3) den zentral angeordneten Induktor (I1) und einen zweiten, in Reihe mit diesem geschalteten Induktor (I2) aufweist, wobei der dritte Induktor (I3) zu dem zentral angeordneten Induktor (I1) parallelgeschaltet ist.

11. Induktoranordnung nach einem der Ansprüche 7 bis 10, dadurch gekennzeichnet, daß die Induktoren voneinander getrennt und auf separaten Heizplatten angeordnet sind, wobei sie unterschiedliche Formen oder Dimensionen aufweisen können.

**Claims**

1. Method for controlling an inductor device intended for the induction heating of cooking vessels, this inductor device having a plurality of inductors connected to a single supply inverter, according to which the inverter is operated to supply the inductors, characterized in that it furthermore includes the following phases, consisting in:

(a) periodically supplying a first inductor (I1) in order to detect a possible load on it, this phase constituting a phase of waiting for a load;
(b) after detection of a load on the first inductor (I1), supplying the next inductor (I2) in order to detect a possible load on it;
(c) successively detecting the presence of a load on each inductor (...In) by supplying it if a load is detected on the preceding inductor element, with the successively supplied inductors on each occasion increasing the heating area delimited by the preceding inductors;
(d) supplying one or more of the inductors (I1, I2, I3 ...In) as a function of the size of the detected load while detecting the presence of the load on the inductor being supplied;
(e) returning to the waiting phase (a) when the absence of a load on the inductor being supplied (I1 ...In) is detected.

2. Method according to Claim 1, characterized in that phase (d) involves the successive supply of the inductors (I1 to In) which are facing a detected load.

3. Method according to Claim 1, characterized in that there are three inductors (I1, I2, I3), and in that phase (d) involves the supply either of a single inductor (I1), or of all the inductors (I1, I2, I3) simultaneously.

4. Method according to Claim 3, characterized in that one (I2) of the three inductors is connected in series with the first inductor (I1), and another inductor (I3) is connected in parallel with the other two inductors (I1, I2).

5. Method according to Claim 3, characterized in that one (I3) of the three inductors is connected in parallel with the first inductor (I1), and another inductor (I2) is connected in series with the first inductor (I1).

6. Method according to any one of the preceding claims, in which the plate has a central inductor (I1) and at least one inductor (I2) which is arranged concentrically around the latter, characterized in that each phase of the cycle is started from the central inductor.

7. Inductor device intended for the induction heating of cooking vessels, comprising a generator (3) supplying a plurality of inductors (I1, I2, I3, ...In) and a switching unit (5) which can selectively supply one or more of these inductors (I1, I2, I3, ...In), characterized in that it has:

- a circuit comprising processing means (7) which are connected to the inductors (I1, I2, I3, ...In) in order to receive signals corresponding to the load arranged facing them, the processing means (7) being capable of analyzing the size of the load on the inductors and of delivering information, and
- a microprocessor (6) which is connected to the processing means and can control the switching unit (5) and the generator (3) in order to supply the inductors (I1, I2, I3 ...In) while taking account of the information received from the processing circuit, so as to:

(a) periodically supply a first inductor (I1) in order to detect a possible load on it, this phase constituting a phase of waiting for a load;

(b) after detection of a load on the first inductor (I1), supply the next inductor (I2) in order to detect a possible load on it;

(c) successively detect the presence of a load on each inductor (...In) by supplying it if a load is detected on the preceding inductor element, with the successively supplied inductors on each occasion increasing the heating area delimited by the preceding inductors;

(d) supply one or more of the inductors (I1, I2, I3 ...In) as a function of the size of the detected load while detecting the presence of the load on the inductor being supplied;

(e) return to the waiting phase (a) when the absence of a load on the inductor being supplied (I1 ...In) is detected.

8. Device according to Claim 7, for a hotplate supplied by a generator consisting of a resonant inverter (3), characterized in that, in the case of a plurality of inductors (I1, I2, I3) which are arranged concentrically, the switching unit supplies:

   - either the central inductor (1) alone,
   - or all the inductors in a circuit whose equivalent impedance is close to the impedance of the central inductor alone.

9. Device according to Claim 8, characterized in that, in the case of three inductors (I1, I2, I3), the circuit comprises the central inductor (I1) and a second inductor (I2) in series with the latter, the third inductor (I3) being connected in parallel with the first two.

10. Device according to Claim 8, characterized in that, in the case of three inductors (I1, I2, I3), the circuit comprises the central inductor (I1) and a second inductor (I2) in series with the latter, the third inductor (I3) being connected in parallel with the central inductor (I1).

11. Device according to any one of Claims 7 to 10, characterized in that the inductors are unconnected with one another and are associated with separate plates which may have different shapes or sizes.

FIG. 1

FIG. 2

FIG. 4

FIG. 5

FIG. 3

```
┌──────────────────┐
│  MISE EN MARCHE  │
│  DE LA PLAQUE    │
└──────────────────┘
        │
        ▼
┌──────────────────────────────────────┐
│  ALIMENTATION PERIODIQUE DE I1        │◄──────────────┐
│  ET DETECTION D'UNE CHARGE SUR        │◄──────┐       │
│  I1 ET MEMORISATION DU RESULTAT       │       │       │
└──────────────────────────────────────┘       │       │
        │                                        │       │
        │                      NON               │       │
        │            ┌───────────────────────────────┐   │
        │            │  ALIMENTATION EN CONTINU DE I1 │   │
        │            │  ET DETECTION D'UNE CHARGE SUR I1│  │
        │            └───────────────────────────────┘   │
        │                          ▲                       │
   OUI  ▼                          │                       │
┌──────────────────────────────┐  │                       │
│  ALIMENTATION DE I2 ET DETECTION│ │                      │
│  D'UNE CHARGE SUR I2 ET        │──┘  NON                 │
│  MEMORISATION DU RESULTAT      │                         │
└──────────────────────────────┘                         │
        │                                                  │
   OUI  ▼                                                  │
┌──────────────────────────────┐    NON                   │
│  ALIMENTATION DE I3 ET DETECTION│─────────┐              │
│  D'UNE CHARGE SUR I3 ET        │          │              │
│  MEMORISATION DU RESULTAT      │          ▼       NON    │
└──────────────────────────────┘  ┌──────────────────────┐│
        │                          │ ALIMENTATION SUCCESSIVE DE I1,│
        │                          │ I2 ET DETECTION D'UNE CHARGE │
        │                          │ SUR L'INDUCTEUR ALIMENTE     │
 NON    │   OUI                    └──────────────────────┘
        ▼
┌──────────────────────────────────┐
│  ALIMENTATION SUCCESSIVE DE I1,  │
│  I2, I3 ET DETECTION D'UNE       │
│  CHARGE SUR L'INDUCTEUR ALIMENTE │
└──────────────────────────────────┘
```